# EUROPÄISCHE PATENTSCHRIFT

(11) **EP 1 737 790 B1**
(45) Veröffentlichungstag und Bekanntmachung des Hinweises auf die Patenterteilung: **09.07.2008**
(21) Anmeldenummer: 05729609.7
(22) Anmeldetag: 10.03.2005
(51) Int. Cl.: C01B 33/107

(54) **VERFAHREN ZUR HERSTELLUNG VON HSiCl3 DURCH KATALYTISCHE HYDRODEHALOGENIERUNG VON SiCl4**
METHOD FOR THE PRODUCTION OF HSiCl3 BY CATALYTIC HYDRODEHALOGENATION OF SiCl4
PROCEDE DE FABRICATION DE HSiCl3 PAR HYDRODESHALOGENATION DE SiCl4

(30) Priorität: 23.04.2004 DE 102004019760
(43) Veröffentlichungstag der Anmeldung: 03.01.2007
(73) Patentinhaber: Evonik Degussa GmbH, 40474 Düsseldorf (DE)
(72) Erfinder: BOHMHAMMEL, Klaus, 09599 Freiberg (DE); KÖTHER, Sven, 09599 Freiberg (DE); ROEWER, Gerhard, 09599 Freiberg (DE); RÖVER, Ingo, 09599 Freiberg (DE); MONKIEWICZ, Jaroslaw, 79618 Rheinfelden (DE); HÖNE, Hans-Jürgen, 61231 Bad Nauheim (DE)
(86) Internationale Anmeldenummer: PCT/EP2005/051081
(87) Internationale Veröffentlichungsnummer: WO 2005/102928

(56) Entgegenhaltungen:
- GRIESSHAMMER R ET AL: "Manufacture of trichlorosilane by reduction of tetrachlorosilane in fluidized bed" CAPLUS, 23. September 1996 (1996-09-23), XP002255710
- PATENT ABSTRACTS OF JAPAN Bd. 006, Nr. 214 (C-131), 27. Oktober 1982 (1982-10-27) & JP 57 118017 A (KOUJIYUNDO SILICONE KK), 22. Juli 1982 (1982-07-22)
- PATENT ABSTRACTS OF JAPAN Bd. 013, Nr. 315 (C-619), 18. Juli 1989 (1989-07-18) & JP 01 100011 A (NKK CORP; others: 01), 18. April 1989 (1989-04-18)

## Beschreibung

Die Erfindung betrifft ein Verfahren zur katalytischen Hydrodehalogenierung von Siliciumtetrachlorid (SiCl₄) zu Trichlorsilan (HSiCl₃) in Gegenwart von Wasserstoff.

Bei vielen technischen Prozessen in der Siliciumchemie entstehen SiCl₄ und SiHCl₃ gemeinsam. Es ist deswegen notwendig, diese beiden Produkte ineinander zu überführen und damit der jeweiligen Nachfrage nach einem der Produkte gerecht zu werden.

Darüber hinaus ist hochreines HSiCl₃ ein wichtiger Einsatzstoff bei der Herstellung von Solarsilicium.

Aus EP 0 658 359 A2 ist ein Verfahren zur katalytischen Hydrodehalogenierung von SiCl₄ zu HSiCl₃ in Gegenwart von Wasserstoff bekannt, bei dem als trägerfreier Katalysator feindisperse Übergangsmetalle oder Übergangsmetallverbindungen aus der Reihe Nickel, Kupfer, Eisen, Kobalt, Molybdän, Palladium, Platin, Rhenium, Cer und Lanthan eingesetzt werden, wobei diese in der Lage sind, mit elementarem Silicium oder Siliciumverbindungen Silicide zu bilden. Problematisch ist dabei, bedingt durch die starke Endothermie der Reaktion, die indirekte Zuführung der Reaktionswärme sowie die Sinterung der Katalysatorpartikel, verbunden mit dem Verlust der Aktivität und die schlechte Regulierbarkeit des Umsatzgrades. Darüber hinaus erfordert die Abtrennung des gebrauchten feindispersen Katalysators aus dem Produktgemisch einen erheblichen Aufwand.

Hierzu ist aus I. Röver et al., "The catalytic hydrogenation of chlorsilanes - the crucial print of production of electronic - grade silicon", Silicon for the Chemical Industry VI, Loen, Norway, 17.06. bis 21.06.2002; Eds.: M. A. Øye et al., Trondheim, Norway, 2002, Seite 209 ff., zu entnehmen, dass nicht alle Übergangsmetalle in der Lage sind, Silicide zu bilden, da die Silicidbildung bei diesen Elementen zumindest partiell kinetisch gehemmt ist.

Der vorliegenden Erfindung lag somit die Aufgabe zugrunde, eine weitere Möglichkeit zur Herstellung von HSiCl₃ aus SiCl₄ bereitzustellen.

Die Aufgabe wird erfindungsgemäß entsprechend den Angaben der Patentansprüche gelöst.

So wurde überraschend gefunden, dass man in einfacher, wirtschaftlicher und wirkungsvoller Weise durch katalytische Hydrodehalogenierung von SiCl₄ in Gegenwart von Wasserstoff HSiCl₃ erzeugen kann, wenn man ein gasförmiges H₂/SiCl₄-haltiges Eduktgemisch mit mindestens einem heißen Heizelement einer Widerstandsheizung in direkten Kontakt bringt, wobei das Heizelement aus einem dafür geeigneten Metall oder einer Metalllegierung besteht.

Besonders überraschend ist der Umstand, dass auch Heizelemente aus Wolfram, Niob, Tantal oder entsprechenden Legierungen unter den vorliegenden Reaktionsbedingungen eine katalytische Wirkung zeigen, obwohl man aufgrund der kinetischen Hemmung der Silicidbildung dies nicht erwarten würde.

Darüber hinaus besitzen solche Heizelemente eine hohe Standfestigkeit, und auf die Abtrennung von fein verteiltem Katalysatorstaub kann vorteilhaft verzichtet werden.

Weiterhin ist vorteilhaft, dass die für die vorliegende Umsetzung erforderliche Energie direkt über die Widerstandsheizung eingetragen werden kann und man so Energieverluste durch indirekte Beheizung eines Reaktors vorteilhaft vermeiden kann.

So kann man erfindungsgemäß beim Überleiten eines SiCl₄/H₂-Gemischs über die beheizten Elemente einer Widerstandsheizung vorteilhaft einen Umsatz zu HSiCl₃ in der Nähe des thermodynamischen Umsatzes erhalten. Auch ist es beim vorliegenden Verfahren möglich, durch Variation der an den Heizelementen der Widerstandsheizung angelegten elektrischen Leistung schnell und flexibel die jeweils gewünschte Produktzusammensetzung erhalten zu können. Der Energieaufwand ist gegenüber herkömmlichen indirekten Beheizungen bedeutend geringer, da nicht der gesamte Gasstrom, sondern vorteilhaft nur das Gas in der Nähe des auch katalytisch wirksamen Heizelements auf Reaktionstemperatur gebracht wird.

Gegenstand der vorliegenden Erfindung ist somit ein Verfahren zur katalytischen Hydrodehalogenierung von SiCl₄ zu HSiCl₃, indem man ein gasförmiges, Wasserstoff und Siliciumtetrachlorid enthaltendes Eduktgemisch mit mindestens einem Heizelement einer Widerstandsheizung in direkten Kontakt bringt, wobei das Heizelement aus einem Metall oder einer Metalllegierung besteht, und man zur Durchführung der Umsetzung das Heizelement erhitzt.

Insbesondere verwendet man beim erfindungsgemäßen Verfahren mindestens ein Heizelement, das aus einem Metall der Reihe Niob, Tantal sowie Wolfram oder aus einer Metalllegierung, die Niob, Tantal und/oder Wolfram enthält, besteht, wobei deren Silicidbildung unter Reaktionsbedingungen im Wesentlichen gehemmt ist.

So setzt man beim erfindungsgemäßen Verfahren bevorzugt mindestens ein Heizelement ein, das die Form eines Drahtes, einer Spirale, eines Stabes, einer Röhre, wie Röhren mit und ohne Stegen, mit Kreuzen oder Einsetzen oder deren Wände mit Löchern versehen sind, einer Platte, beispielsweise glatte oder gewellte Platten, Lochplatten oder Platten mit Falzen, mit Sicken oder Aufbauten oder Plattenpakte, eines Netzes, beispielsweise glatte oder gewellte Netze, oder eines Wabenkörpers, beispielsweise mit rundem, quadratischem, dreieckigem, sechs- oder achteckigem Zellquerschnitt, aufweist.
Dabei bevorzugt man Heizelemente, deren Drahtdurchmesser, Wandstärke oder Platten- bzw. Schichtdicke 0,1 mm bis 10 mm, vorzugsweise 0,3 bis 8 mm, besonders bevorzugt 0,5 bis 5 mm, beträgt.

Solche Heizelemente einer an sich bekannten Widerstandheizung setzt man bei erfindungsgemäßen Verfahren bevorzugt in einem Durchflussreaktor ein, der seinerseits mit einem gasförmigen H₂/SiCl₄-Gemisch beaufschlagt werden kann. Die beschriebenen Heizelemente sind in der Regel käuflich zu erwerben und werden vorteilhaft mit wassergekühlten elektrischen Stromanschlüssen in an sich bekannter Weise versehen. Zur Durchführung des erfindungsgemäßen Verfahrens wird der vorliegenden Widerstandsheizung elektrisch Leistung angelegt, wodurch die Heizelemente erhitzt werden und die Hydrodehalogenierung von SiCl₄ zu HSiCl₃ erfindungsgemäß stattfindet. Die elektrische Leistung wird dabei in der Regel langsam erhöht, beispielsweise in einem Zeitraum von etwa 30 Minuten, bis die gewünschte Reaktionstemperatur erreicht ist. Zur Kontrolle und Steuerung werden Temperaturmessungen bevorzugt an den Heizelementen, an der Reaktorwand und im Edukt- bzw. Produktstrom ausgeführt.

So betreibt man beim erfindungsgemäßen Verfahren die Heizelemente der Widerstandsheizung bevorzugt bei einer Temperatur im Bereich von 300 bis 1 250° C, insbesondere bei 700 bis 950 °C.

Die erfindungsgemäße Umsetzung führt man somit geeigneterweise bei einer Temperatur im Bereich von 600 bis 950 °C, insbesondere bei 700 bis 900 °C, und einem Druck von 0,1 bis 100 bar abs., bevorzugt bei 1 bis 10 bar abs., insbesondere bei 1,5 bis 2,5 bar abs., durch.

Beim erfindungsgemäßen Verfahren betreibt man die Umsetzung bevorzugt bei einer Raumgeschwindigkeit (SV = Volumenstrom/mit Heizelementen bestücktes Reaktorvolumen) von 2 000 bis 750 000 h⁻¹, bevorzugt von 5 000 bis 500 000 h⁻¹, und/oder einer Volumenstrom bezogenen Katalysatoroberfläche (AV = Volumenstrom/-Katalysatoroberfläche) von 10 bis 0,01 m/s, besonders bevorzugt bei 1 bis 0,05 m/s. Ferner bevorzugt man dabei, dass das Gasgemisch aus Wasserstoff und Siliciumtetrachlorid mit einer Lineargeschwindigkeit (LV = Volumenstrom/Reaktorquerschnittsfläche) von 0,01 bis 10 m/s, vorzugsweise 0,01 bis 8 m/s, besonders bevorzugt mit 0,02 bis 5 m/s, über die Heizelemente der Widerstandsheizung geleitet wird. Die den vorangehenden und nachfolgenden reaktionskinetischen Parametern zugrundeliegenden Volumenströme sind jeweils auf Normbedingungen bezogen. Geeigneterweise stellt man die Verfahrensparameter so ein, dass sich eine laminare Strömung einstellt.

So setzt man beim erfindungsgemäßen Verfahren ein gasförmiges SiCl₄/H₂-Gemisch ein, das vorzugsweise ein Molverhältnis SiCl₄ : H₂ von 1 : 0,9 bis 1 : 20, besonders bevorzugt von 1 :1 bis 1 :10, ganz besonders bevorzugt von 1 :1,5 bis 1 :8, insbesondere von 1 : 2 bis 1 : 4, aufweist.

In der Regel geht man dabei so vor, dass SiCl₄ - sofern erforderlich - in die Gasphase überführt wird und man Wasserstoffgas definiert zudosiert. Dabei sind insbesondere Spuren an Wasser sowie Sauerstoff auszuschließen. Geeigneterweise setzt man SiCl₄ und Wasserstoff von reiner bis hochreiner Qualität ein.

Den gewünschten Umsetzungsgrad [u = 100 % - c(HSiCl₃)/c₀(SiCl₄)] kann man beim erfindungsgemäßen Verfahren durch Vorgabe der elektrischen Leistung der Widerstandsheizung vorteilhaft regeln bzw. einstellen, auch ohne dass eine Unterbrechung des Verfahrens erforderlich wird.

Ferner führt man die erfindungsgemäße Umsetzung geeigneterweise in einem Durchflussreaktor durch, dessen Wände oder Wandinnenseiten aus Niob, aus Wolfram, aus Tantal, aus einer Niob-, Wolfram- und/oder Tantal-haltigen Legierung, aus einem temperaturbeständigen Glas, insbesondere aus Quarzglas, aus einer temperaturbeständigen Glasur oder einer temperaturbeständigen Keramik bzw. Sonderkeramik bestehen.

Das beim erfindungsgemäßen Verfahren erhaltene Produktgemisch bzw. der Produktgasstrom kann vor einer Weiter- bzw. Aufarbeitung vorteilhaft über mindestens einen am Anfang des Prozesses, d. h. vor Reaktor befindlichen Wärmetauscher geführt werden, um SiCl₄ zu verdampfen und/oder das H₂/SiCl₄-haltige Eduktgemisch energiesparend vorzuheizen. So kann man den Eduktgasstrom und den Produktgasstrom vorteilhaft im Gegenstrom führen, um das Eduktgas bereits vorzuwärmen und somit besonders energieeffizient arbeiten zu köhnen.

Beim erfindungsgemäßen Verfahren kann man das so erhaltene Umsetzungsprodukt, d. h. Produktgemisch aufarbeiten oder weiterverarbeiten, wobei man bevorzugt (i) das Produktgemisch fraktioniert bzw. zumindest partiell in an sich bekannter Weise kondensiert, flüssiges, vorteilhaft hochreines HSiCl₃ gewinnt und gegebenenfalls anfallenden Wasserstoff sowie Siliciumtetrachlorid in den Eduktstrom des vorliegenden Prozesses zurückführt oder (ii) den Produktstrom als Edukt einer direkten Weiterverwertung zuführt, beispielsweise in einer Veresterung mit einem Alkohol zu Alkoxysilanen, in einem Hydrosilylierungsverfahren von Olefinen zu Organochlorsilanen, bei der Herstellung von Monosilan bzw. Solarsilicium oder bei der Herstellung pyrogener Kieselsäure.

Im Allgemeinen führt man das erfindungsgemäße Verfahren derart aus, dass man ein definiertes Gasgemisch aus Wasserstoff und Siliciumtetrachlorid herstellt. Ein gegenüber Siliciumtetrachlorid bzw. HCl und höheren Temperaturen beständiger Reaktor, in dessen Reaktionsbereich metallische Heizelemente einer Widerstandsheizung integriert sind, wird üblicherweise zunächst ausgeheizt und mit trockenem Inertgas, beispielsweise Argon, oder mit Wasserstoff gespült. Durch Anlegen elektrischer Leistung kann die Widerstandsheizung vorgefahren, auf Reaktionstemperatur eingestellt und mit dem Eduktgasgemisch aus H₂ und SiCl₄ beaufschlagt werden. Auf der Abströmseite des Reaktors - erhält man ein Produktgemisch, das vorteilhaft HSiCl₃ bis hin zur thermodynamischen Gleichgewichtskonzentration enthält.

Die vorliegende Erfindung wird durch die nachfolgenden Beispiele näher erläutert, ohne den Gegenstand der vorliegenden Erfindung zu beschränken.

### Beispiele:

### Beispiel 1

In einem Quarzglasreaktor eines Durchmessers von 15 mm und einer Länge von 250 mm wird ein W-Draht eines Durchmessers von 0,4 mm und von 400 mm Länge in Form einer Spirale als direkte Widerstandsheizung eingesetzt. Dieser Draht wird durch Anlegen einer Spannung von 10 bis 11 V auf Reaktionstemperatur von 800 °C erhitzt. Die Temperatur des Drahtes wird mittels eines gemantelten Thermoelements gemessen. Durch den Reaktor strömt ein H₂/SiCl₄-Gemisch mit einem Durchsatz von 7 l/h. Der Umsatz der Reaktion wird gaschromatographisch verfolgt. Tabelle 1 gibt den Umsatz von SiCl₄ zu HSiCl₃ bei verschiedenen H₂/SiCl₄-Verhältnissen wieder.

**Tabelle 1**

| n(H₂)/n(SiCl₄) | Umsatzgrad zu HSiCl₃ (%) |
|---|---|
| 4 | 15,3 |
| 5,5 | 18,3 |
| 6 | 19,0 |

### Beispiel 2

Verwendet wird die im Beispiel 1 erklärte Apparatur. Es werden die Umsetzungsgrade in Abhängigkeit von der Strömungsgeschwindigkeit bei 800 °C und einem konstanten n(H₂)/n(SiCl₄)-Verhältnis von 6 : 1 ermittelt, vgl. Tabelle 2.

**Tabelle 2**

| Volumenstrom i.N. (l/h) | Umsatzgrad zu HSiCl₃ (%) |
|---|---|
| 7 | 19,0 |
| 10,5 | 17,6 |
| 14 | 16,7 |

### Beispiel 3

In einem Quarzglasreaktor eines Durchmessers von 15 mm und einer Länge von 250 mm wird ein W-Draht mit einer Oberfläche von 5,6 cm² in Form einer Spirale eingesetzt. Dieser Draht wird durch Anlegen einer Spannung auf Reaktionstemperatur von 900 °C erhitzt. Durch den Reaktor strömt ein H₂/SiCl₄-Gemisch mit einem Durchsatz von 7 l/h. Der Umsatz der Reaktion wird gaschromatographisch verfolgt. Tabelle 3 gibt den Umsatz von SiCl₄ zu HSiCl₃ bei verschiedenen H₂/SiCl₄-Verhältnissen wieder.

**Tabelle 3**

| n(H₂)/n(SiCl₄) | Umsatzgrad zu HSiCl₃ (%) |
|---|---|
| 4 | 20,9 |
| 6 | 21,1 |

### Beispiel 4

Verwendet wird die im Beispiel 3 erklärte Apparatur. Es wird bei einem konstanten Molverhältnis H₂/SiCl₄ von 6 und einem Durchsatz von 71/h gearbeitet. Die angelegte elektrische Leistung wird von 65 W auf 80 W erhöht. Innerhalb weniger Minuten hat sich der Umsetzungsgrad von 21,1 Mol-% auf 23,4 Mol% erhöht.

## Patentansprüche

1. Verfahren zur katalytischen Hydrodehalogenierung von SiCl₄ zu HSiCl₃, indem man ein gasförmiges H2/SiCl₄-haltiges Eduktgemisch mit mindestens einem Heizelement einer Widerstandsheizung in direkten Kontakt bringt, wobei das Heizelement aus einem Metall oder einer Metalllegierung besteht, und man zur Durchführung der Umsetzung das Heizelement erhitzt.

2. Verfahren nach Anspruch 1,
**dadurch gekennzeichnet,**
**dass** man mindestens ein Heizelement verwendet, das aus einem Metall der Reihe Niob, Tantal sowie Wolfram oder aus einer Metalllegierung, die Niob, Tantal und/oder Wolfram enthält, besteht.

3. Verfahren nach Anspruch 1 oder 2,
**dadurch gekennzeichnet,**
**dass** man mindestens ein Heizelement einsetzt, das die Form eines Drahtes, einer Spirale, eines Stabes, einer Röhre, einer Platte, eines Netzes oder eines Wabenkörpers besitzt.

4. Verfahren nach einem der Ansprüche 1 bis 3,
**dadurch gekennzeichnet,**
**dass** man ein Heizelement einsetzt, dessen Drahtdurchmesser, Wandstärke oder Platten- bzw. Schichtdicke 0,1 mm bis 10 mm beträgt.

5. Verfahren nach einem der Ansprüche 1 bis 4,
**dadurch gekennzeichnet,**
**dass** man die Heizelemente der Widerstandsheizung bei einer Temperatur im Bereich von 300 bis 1250° C betreibt.

6. Verfahren nach einem der Ansprüche 1 bis 5,
**dadurch gekennzeichnet,**
**dass** man die Umsetzung bei einer Temperatur im Bereich von 600 bis 950° C und einem Druck von 0,1 bis 100 bar abs. durchführt.

7. Verfahren nach einem der Ansprüche 1 bis 6,
**dadurch gekennzeichnet,**
**dass** man die Umsetzung bei einer Raumgeschwindigkeit von 2 000 bis 750 000 h⁻¹ betreibt und man das Gasgemisch aus Wasserstoff und Siliciumtetrachlorid mit einer Lineargeschwindigkeit von 0,01 bis 10 m/s über die Heizelemente der Widerstandsheizung leitet.

8. Verfahren nach einem der Ansprüche 1 bis 7,
**dadurch gekennzeichnet,**
**dass** man ein SiCl₄/H₂-Gemisch mit einem Molverhältnis von 1 : 0,9 bis 1 : 20 einsetzt.

9. Verfahren nach einem der Ansprüche 1 bis 8,
**dadurch gekennzeichnet,**
**dass** man den Umsetzungsgrad durch Vorgabe der elektrischen Leistung der Widerstandsheizung einstellt.

10. Verfahren nach einem der Ansprüche 1 bis 9,
**dadurch gekennzeichnet,**
**dass** man die Umsetzung in einem Durchflussreaktor durchführt, dessen Wände oder Wandinnenseiten aus Niob, aus Wolfram, aus Tantal, aus einer Niob-, Wolfram- und/oder Tantal-haltigen Legierung, aus einem temperaturbeständigen Glas, aus Quarzglas, aus einer temperaturbeständigen Glasur oder einer temperaturbeständigen Keramik bestehen.

11. Verfahren nach einem der Ansprüche 1 bis 10,
**dadurch gekennzeichnet,**
**dass** man das Produktgemisch über mindestens einen am Anfang des Prozesses befindlichen Wärmetauscher führt, um SiCl₄ zu verdampfen und/oder das H₂/SiCl₄-haltige Eduktgemisch vorzuwärmen.

12. Verfahren nach einem der Ansprüche 1 bis 11,
**dadurch gekennzeichnet,**
**dass** man (i) das Produktgemisch zumindest partiell kondensiert, flüssiges HSiCl₃ gewinnt und gegebenenfalls anfallenden Wasserstoff sowie Siliciumtetrachlorid in den Eduktstrom des Prozesses zurückführt oder (ii) den Produktstrom als Edukt einer Weiterverwertung zuführt.

## Claims

1. Process for the catalytic hydrodehalogenation of SiCl₄ to form HSiCl₃, which comprises bringing a gaseous feed mixture comprising hydrogen and silicon tetrachloride into direct contact with at least one heating element of a resistance heating device, with the heating element being composed of a metal or a metal alloy and being heated to carry out the reaction.

2. Process according to Claim 1,
**characterized in that**
at least one heating element composed of a metal from the group consisting of niobium, tantalum and tungsten or of a metal alloy comprising niobium, tantalum and/or tungsten is used.

3. Process according to Claim 1 or 2,
**characterized in that**
at least one heating element which has the form of a wire, a spiral, a web, a tube, a plate, a mesh or a honeycomb body is used.

4. Process according to any of Claims 1 to 3,
**characterized in that**
a heating element whose wire diameter, wall thickness or plate or layer thickness is from 0.1 mm to 10 mm is used.

5. Process according to any of Claims 1 to 4,
**characterized in that**
the heating elements of the resistance heating device are operated at a temperature in the range from 300 to 1250°C.

6. Process according to any of Claims 1 to 5,
**characterized in that**
the reaction is carried out at a temperature in the range from 600 to 950°C and a pressure of from 0.1 to 100 bar abs.

7. Process according to any of Claims 1 to 6,
**characterized in that**
the reaction is carried out at a space velocity of from 2000 to 750 000 h⁻¹ and the gas mixture of hydrogen and silicon tetrachloride is passed over the heating elements of the resistance heating device at a linear velocity of from 0.01 to 10 m/s.

8. Process according to any of Claims 1 to 7,
**characterized in that**
an SiCl₄/H₂ mixture having a molar ratio of from 1:0.9 to 1:20 is used.

9. Process according to any of Claims 1 to 8,
**characterized in that**
the degree of conversion is set by setting the electric power of the resistance heating device.

10. Process according to any of Claims 1 to 9,
**characterized in that**
the reaction is carried out in a flow reactor whose walls or wall insides are composed of niobium, tungsten, tantalum, a niobium-, tungsten- and/or tantalum-containing alloy, a heat-resistant glass, fused silica, a heat-resistant glaze or a heat-resistant ceramic.

11. Process according to any of Claims 1 to 10,
**characterized in that**
the product mixture is passed through at least one heat exchanger located at the beginning of the process in order to vaporize SiCl₄ and/or preheat the H₂/SiCl₄-containing feed mixture.

12. Process according to any of Claims 1 to 11,
**characterized in that**
(i) the product mixture is at least partially condensed, liquid HSiCl₃ is isolated and any hydrogen and silicon tetrachloride obtained are recirculated to the feed stream to the process or (ii) the product stream is passed as starting material to a further use.

## Revendications

1. Procédé en vue de l'hydrodéshalogénation catalytique de SiCl₄ en HSiCl₃, en mettant directement en contact un mélange de produits de départ gazeux contenant H₂/SiCl₄ avec au moins un élément de chauffage d'un chauffage à résistance, l'élément de chauffage se composant d'un métal ou d'un alliage métallique et l'élément de chauffage étant chauffé en vue de la mise en oeuvre de la réaction.

2. Procédé selon la revendication 1, **caractérisé en ce que** l'on utilise au moins un élément de chauffage, qui se compose d'un métal de la série niobium, tantale ainsi que tungstène ou d'un alliage métallique, qui contient du niobium, du tantale et/ou du tungstène.

3. Procédé selon la revendication 1 ou 2, **caractérisé en ce que** l'on utilise au moins un élément de chauffage, qui possède la forme d'un fil, d'une spirale, d'une tige, d'un tube, d'une plaque, d'un treillis ou d'un corps en nids d'abeilles.

4. Procédé selon l'une quelconque des revendications 1 à 3, **caractérisé en ce que** l'on utilise un élément de chauffage, dont le diamètre de fil, l'épaisseur de paroi ou l'épaisseur de plaque ou de couche est de 0,1 à 10 mm.

5. Procédé selon l'une quelconque des revendications 1 à 4, **caractérisé en ce que** l'on fait fonctionner les éléments de chauffage du chauffage à résistance à une température dans la plage de 300 à 1250°C.

6. Procédé selon l'une quelconque des revendications 1 à 5, **caractérisé en ce que** l'on effectue la réaction à une température dans le domaine de 600 à 950°C et à une pression de 0,1 à 100 bars en pression absolue.

7. Procédé selon l'une quelconque des revendications 1 à 6, **caractérisé en ce que** l'on procède à la réaction à une vitesse spatiale de 2 000 à 750 000 h⁻¹ et **en ce que** l'on conduit le mélange gazeux fait d'hydrogène et de tétrachlorure de silicium à une vitesse linéaire de 0,01 à 10 m/s sur les éléments de chauffage du chauffage à résistance.

8. Procédé selon l'une quelconque des revendications 1 à 7, **caractérisé en ce que** l'on utilise un mélange SiCl₄/H₂ ayant un rapport molaire de 1:0,9 à 1:20.

9. Procédé selon l'une quelconque des revendications 1 à 8, **caractérisé en ce que** l'on règle le degré de conversion par spécification de la puissance électrique du chauffage à résistance.

10. Procédé selon l'une quelconque des revendications 1 à 9, **caractérisé en ce que** l'on effectue la réaction dans un réacteur à flux traversant, dont les parois ou les faces internes de paroi se composent de niobium, de tungstène, de tantale, d'un alliage contenant du niobium, du tungstène et/ou du tantale, d'un verre résistant à la température, d'un verre de quartz, d'un glacis résistant à la température ou d'une céramique résistant à la température.

11. Procédé selon l'une quelconque des revendications 1 à 10, **caractérisé en ce que** l'on procède au préchauffage du mélange de produits par l'intermédiaire d'au moins un échangeur thermique se trouvant au début du processus, pour vaporiser le SiCl₄ et/ou pour préchauffer le mélange de produits de départ contenant H₂/SiCl₄.

12. Procédé selon l'une quelconque des revendications 1 à 11, **caractérisé en ce que** (i) l'on condense au moins partiellement le mélange de produits, **en ce que** l'on obtient du HSiCl₃ liquide et **en ce que** l'on recycle l'hydrogène ainsi que le tétrachlorure de silicium qui se forment, le cas échéant, dans le courant de produits de départ du processus ou **en ce que** (ii) l' on amène le courant de produits en tant que produit de départ d'une utilisation ultérieure.
